# EUROPEAN PATENT SPECIFICATION

(11) **EP 3 439 841 B1**
(45) Date of publication and mention of the grant of the patent: **03.03.2021**
(21) Application number: 17721849.2
(22) Date of filing: 31.03.2017
(51) Int. Cl.: B28D 1/04, B23D 47/04

(54) **MACHINE FOR CUTTING SLABS OF STONE OR STONE-LIKE MATERIAL**
MASCHINE ZUM SCHNEIDEN VON PLATTEN AUS STEIN ODER EINEM STEINARTIGEN MATERIAL
MACHINE POUR LA COUPE DE DALLES EN MATÉRIAUX PIERREUX OU SIMILAIRES

(30) Priority: 04.04.2016 IT UA20162285
(43) Date of publication of application: 13.02.2019
(73) Proprietor: Breton S.p.A., 31030 Castello di Godego (TV) (IT)
(72) Inventor: TONCELLI, Dario, 36061 Bassano del Grappa (VI) (IT); CODEMO, Renzo, 31011 Villa d'Asolo - Asolo (Treviso) (IT)
(74) Representative: Dragotti, Gianfranco
(86) International application number: PCT/IB2017/051855
(87) International publication number: WO 2017/175102

(56) References cited:
- WO-A1-2010/066519
- WO-A1-2011/144270
- WO-A1-2014/207723
- DE-U1- 29 705 698
- US-A1- 2011 283 859

## Description

The present invention relates to a machine for cutting slabs of stone or stone-like material according to the preamble of claim 1.

In particular, the present invention relates to a machine for cutting slabs of stone or stone-like material provided with integrated devices for moving slabs or portions thereof.

Such a machine is known for example from US2011/283859A1.

The machines of the known type which are most used comprise a work bench and two lateral support structures on which a beam runs, resting on the structures with its ends. A sleeve-support carriage slides along the beam. A sleeve slides with respect to the carriage in a vertical direction. A cutting head is fixed to the lower part of the sleeve and is able to rotate relative thereto about a substantially vertical axis. The cutting head is provided with a cutting spindle which may be further moved by the machining head so as to rotate about an axis which may be horizontal or inclined, depending on the type of machining head used. A cutting disc, of the type well-known to the person skilled in the art and therefore not described in greater detail, is mounted on the spindle.

This type of device is also provided with a device for manipulating slabs or portions thereof, using one or more suction cups.

Moreover, a number of variants of this machine are also known, in particular machines having two or four different machining heads which may also be used simultaneously.

In order to divide a slab into portions, longitudinal cuts are performed, parallel to each other, so as to form strips of material which are then spaced from each other by means of the manipulator so that transverse cuts may be carried out on a strip without affecting adjacent strips.

The suction-cup manipulator may be arranged on a cowling for protection of the cutting disc so as to be substantially parallel to the plane containing the cutting disc. Alternatively, it may be arranged on an arm mounted on the sleeve and preferably may rotate about a vertical axis. Also known are other configurations of the manipulator device, for example mounted on a separate beam.

These machines have a high degree of flexibility because the cutting disc is rotatable about a vertical axis so as to perform cuts which are at right angles to each other or oblique in any direction and may also be inclined relative to the vertical plane so as to perform cuts inclined with respect to the vertical. In other words, with the same cutting disc, it is possible to cut strips, and also perform transverse cuts, after suitably spacing, and if necessary orienting, the strips with respect to each other by means of the manipulator device.

Therefore, it is evident that these machines are particularly flexible because they allow a large number of different machining operations to be performed, to the detriment, however, of the productivity since the cutting disc is used to perform the longitudinal, transverse and inclined cuts.

In fact, in order to obtain a high level of productivity, cutting machines, known as "TAP" machines, are used, these having on the beam a plurality of cutting spindles arranged side-by-side (even up to seven cutting spindles and more) having a disc-holder axis parallel to the beam. These spindles do not rotate about a vertical axis, but can be moved only along the beam and in the vertical direction, independently of each other. It is therefore possible to exclude for example one or more cutting spindles, keeping them at a height such that the blade does not cut into the strip. Moreover, it is possible to space them along the beam, also at different distances from each other, so as to form strips of varying width.

In this way, the cutting spindles, which are arranged alongside each other in a parallel manner, allow the slab to be cut simultaneously along several cutting lines parallel to each other. In order to perform the transverse cuts, the work bench is rotated so as to position the strips in the desired position, for example rotating it through 90°.

A machine of this type may be used to cut a slab into strips which are all parallel to each other or in order to cut a slab with what is known as a criss-cross pattern.

The same machine may also be provided with a strip manipulator for spacing the strips from each other, such that it may be used also when a slab is to be cut with offset cuts, which do not form a chequered pattern, by suitably rotating the work bench.

To conclude, although the productivity of this type of machine is not very high, the flexibility in terms of type of machining operations which can be performed is very limited compared to the machines of the preceding example.

The prior art has attempted to find an advantageous solution which would allow the productivity to be maximized and at the same time a certain flexibility to be maintained.

A first solution adopted was that of using two different machines: a "TAP" machine and machine with one or more adjustable machining heads. However, this results in a high cost incurred for the purchase and use of two machines and also the continuous movement of the cut material from one machine to the other.

Moreover cutting machines which offer a high degree of flexibility and at the same time are able to ensure a reasonable degree of productivity have been developed.

For example, the machine illustrated in International Patent Application WO2014/207723 is provided with a secondary beam mounted on the carriage which slides along the main beam. The secondary beam rotates about a vertical axis and carries three cutting spindles which can be positioned along the secondary beam. The secondary beam has, associated with it, a suction cup device for moving the cut parts.

In this way, against an increased cost of the machine, but nevertheless way below the cost of two separate machines, it is possible to achieve a good level of productivity.

This machine, however, also has certain drawbacks.

In fact, a first drawback is due to the fact that, owing to the presence of the secondary beam with three cutting spindles, the carriage to be moved and consequently also the beams, both the secondary beam and the main beam, have a significant weight such that that machine must be designed with suitably larger dimensions in order to withstand the masses involved.

This also results in increased costs and a larger overall size of the machine.

Finally, owing to the high masses which are to be moved, the accelerations and maximum speeds reached are necessarily limited in nature.

A further drawback is associated with the kinematic chain for moving each cutting spindle. In fact, for movement of the cutting spindles, many axes are involved, in particular:
- the guides on the pathways along which the beam travels;
- the beam guides along which the carriage travels;
- the carriage swivel bearing around which the secondary beam rotates;
- the guides of the secondary beam along which the cutting spindle supports slide; and
- the vertical guides along which the spindles slide.

Consequently, the machining precision of the cut is relatively limited owing to the accumulated sum of all the constructional imprecision.

A third drawback is associated with the length of the secondary beam. In fact, since the length must be necessarily limited, the distance between two different discs must be necessarily reduced and this results in serious limitations in the event of cuts with a spacing having a length greater than the maximum relative distance between the cutting discs.

The object of the invention is therefore to solve substantially or at least partially the drawbacks of the prior art.

A first task of the present invention is to provide a machine which, while maintaining a high degree of flexibility, is able to achieve a good level of productivity, all of which at a low cost. A second task of the present invention is to provide a machine which has a low mass during the cutting operations, while favouring the cutting precision.

A further task of the present invention is to provide a machine in which the kinematic chain for movement of the spindles is limited so as to obtain precise cuts.

According to the invention, a machine defined by the features of claim 1 is provided. Further preferred embodiments are defined by the features of the dependent claims.

The advantages and characteristic features of the present invention will emerge more clearly from the detailed description below of a number of examples of embodiment provided by way of a non-limiting example, with reference to the attached drawings in which:
- Fig. 1 shows in schematic form a front view of a machine according to the present invention in a first operating configuration;
- Fig. 2 shows in schematic form a front view of the machine according to Figure 1 in a second operating configuration;

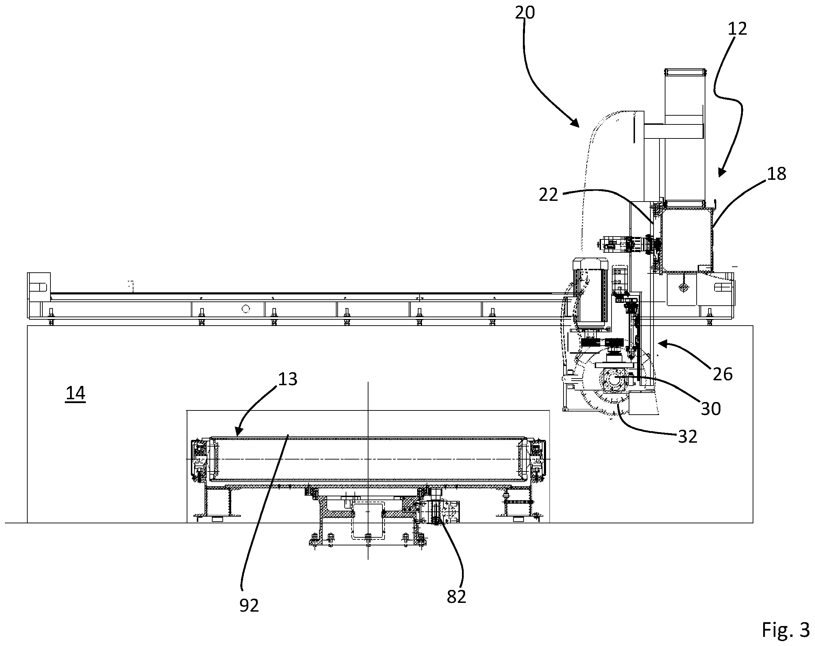

- Fig. 3 shows in schematic form a side view of the machine according to Figure 1;
- Fig. 4 shows in schematic form a top plan view of the machine according to Figure 1, in a possible working configuration;
- Fig. 5 shows in schematic form a top plan view of the machine according to Figure 4, in a further working configuration;
- Figs. 6A-6E show in schematic form a possible sequence for cutting a slab with a machine according to the present invention; and
- Figs. 7A-7F show in schematic form a further possible sequence for cutting a slab with a machine according to the present invention.

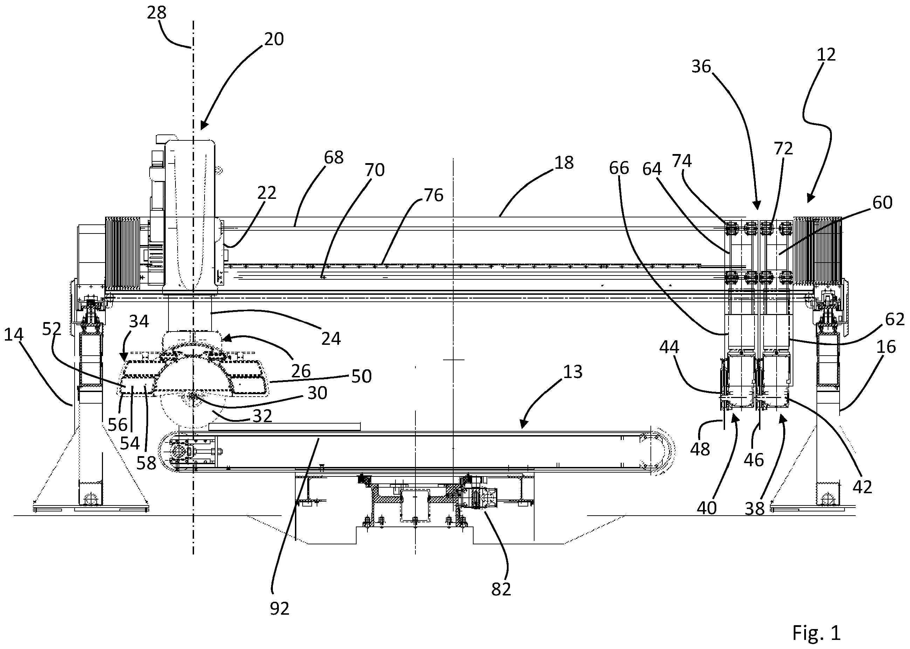

Figure 1 shows a machine, indicated by the reference number 12, for cutting slabs of stone or stone-like material.

In the present description reference will be made to:
- a horizontal direction, i.e. substantially parallel to the surface of the ground; and
- a vertical direction, i.e. substantially vertical to the above direction.

The machine 12 comprises a work bench 13, two lateral support structures 14, 16 between which a beam 18 runs.

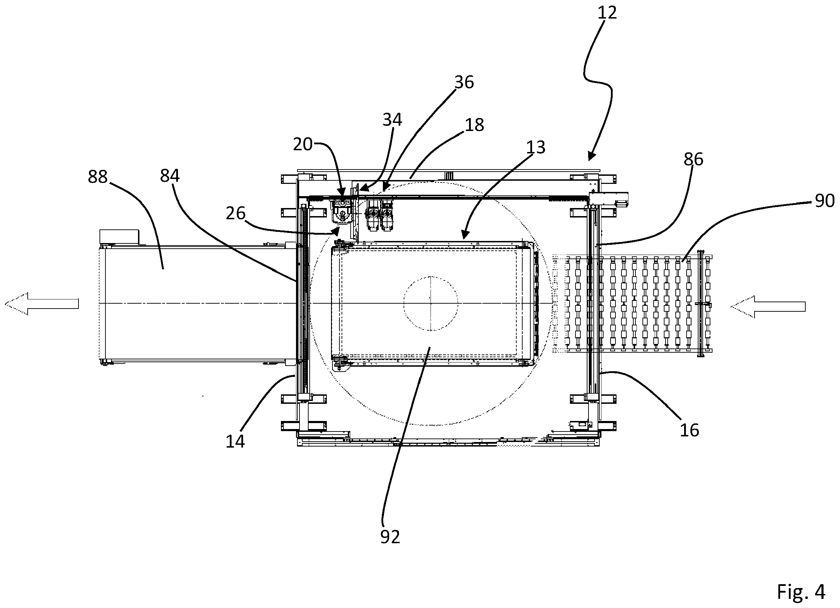

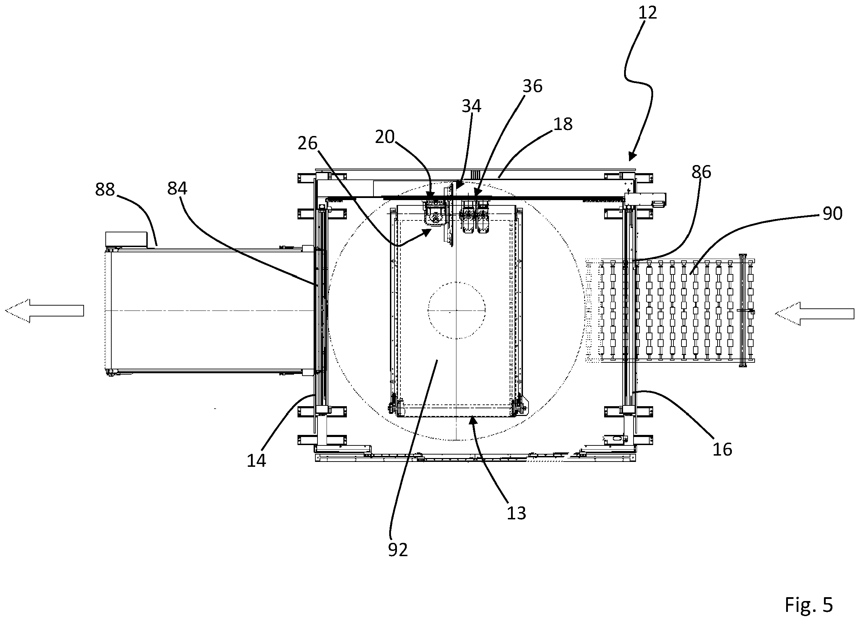

In accordance with a possible embodiment of the present invention, the work bench 13 may be rotatable. Figure 4 shows the work bench in a first configuration, while Figure 5 shows the table rotated through 90°.

Advantageously a drive unit 82 may be provided for rotation of the work bench 13.

The work bench 13 may be provided with a motorized conveyor belt 92 for feeding the slabs. With reference to Figures 4 and 5 the lateral support structures 14, 16 are provided with respective openings 84, 86 through which the slabs may pass. Entry and exit conveyor belts 88, 90 into/from the machine 12, which may be motorized, may be provided for feeding the slab onto the work bench and for extracting the cut parts.

The machine 12 comprises a first machining unit 20 adapted to slide along the beam 18, said unit comprising:
- a carriage 22, provided on said beam 28 and adapted to slide in the horizontal direction on the beam 18;
- a sleeve 24 arranged on the carriage 22 and adapted to slide in the vertical direction;
- a machining head 26 comprising a spindle 30 provided at one end of the sleeve 24 and rotatable with respect to the sleeve 24 about a substantially vertical axis 28.

A cutting disc 32 is mounted on the spindle 30.

In accordance with a possible embodiment of the present invention, the machining head 26 may be a so-called bi-rotational head, namely it may be adapted to rotate the spindle 30 both about a vertical axis and about a second axis of rotation.

The second axis of rotation may be an axis inclined substantially horizontal (as in the attached figures) or may be an axis inclined at an angle of less than 90° with respect to the vertical axis of rotation, for example 45°.

The types of machining head will be not be described in greater detail since they are known to the person skilled in the art.

The advantages which can be obtained when using a bi-rotational machining head are well-known to the person skilled in the art, these including the possibility of performing diagonal cuts and the possibility of performing inclined cuts with respect to the vertical plane.

The machining head 26 further comprises manipulator means 34 for a slab or slab portions. In accordance with the embodiment shown in Figure 1, the machining head 26 comprises a protection element or cowling 50 partially covering the cutting disc 32. The function of the protection element 50 is well-known and in particular allows the operator to be protected from the coolant spray and machining swarf. The outer surface of the protection element, which is substantially parallel to the position of the blade, may be provided with manipulator means 34 which comprise suction cups 52 obtained by defining a portion of the outer surface 54 of the protection element 50 with a perimetral seal 56. In the portion of the outer surface 54 in the region of each suction cup a hole 58 is also provided for connecting said surface portion to a vacuum circuit (not shown in the attached drawings).

The operation of this type of manipulator involves firstly rotation of the spindle 30, so that the suction cups 52 are substantially parallel to the surface of the slab or the portion which must be displaced, or a lowering movement so that the perimetral seals 56 come into contact with the surface of the slab. Once contact with the slab occurs, the vacuum circuit is activated so that gripping take places. Then the cut slab portion is raised, displaced and lowered onto the work bench at the desired point so as to be spaced from the remaining parts of the said slab. The vacuum circuit is deactivated and the slab released onto the work bench 13.

The manipulator means are thus rotatable about a vertical axis, so as to be able to orient the strips on the bench, thus reducing the machining time.

The reference to this type of manipulator means is not intended to be limiting in any way, since the principles of the present invention are applicable equally well also to manipulator means of a different type.

For example, the machine could be equipped with manipulator means engaged with the sleeve and in this case also rotatable about a vertical axis so as to be able to orient the strips on the bench, thus reducing the machining time.

The machine comprises a second machining unit 36 comprising at least one second machining head 38 with fixed orientation, adapted to be moved in the vertical direction and comprising a spindle 42 on which a cutting disc 46 is arranged.

The second machining unit 36 comprises at least one second machining head 38. In Figure 1 the machine comprises the second machining head 38 and a third machining head 40 with fixed orientation, arranged side-by-side and adapted to be moved in the vertical direction, each respectively comprising a spindle 42, 44 on which a cutting disc 46, 48 may be provided.

In accordance with a possible embodiment of the present invention, the cutting discs 46, 48 of the second machining unit 36 are parallel to each other and are positioned perpendicularly relative to the direction of extension of the beam.

In order to perform the cuts, the discs of the second machining unit are moved during their working advancing movement by means of the movement of the beam which travels along the lateral support structures.

Alternatively, the cutting discs of the second machining unit may be positioned parallel to the direction of extension of the beam. In this case the cut will be obtained by displacing the cutting spindles along the beam.

In accordance with an alternative embodiment, the second machining unit 36 may comprise a greater number of machining heads, for example three or four.

The second machining unit 36 may comprise a second carriage 60 which is adapted to slide along the beam 18 and on which there is arranged a second sleeve 62 movable in the vertical direction with respect to the second carriage 60 on which the second machining head 38 is arranged.

The second machining unit 36 may comprise a third carriage 64 which is adapted to slide along the beam 18 and on which there is arranged a third sleeve 66 movable in the vertical direction with respect to the third carriage 64 on which the third machining head 40 is arranged.

In accordance with a possible embodiment of the present invention the at least two carriages 60, 64 are movable along the beam 18, independently of each other.

The beam 18 may be provided with two guides 68, 70 along which shoes 72, 72 for sliding of the machining units travel.

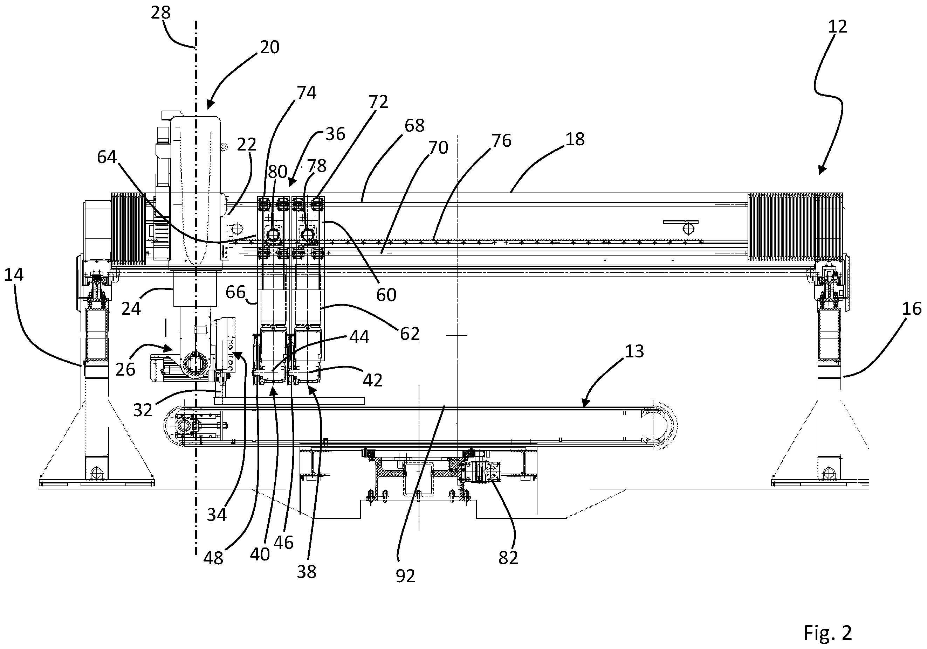

In accordance with a possible embodiment of the present invention, the means which allow the displacement may consist of a rack 76 arranged parallel to the guides 68, 70 and, between them, a motorized pinion 78, 80 arranged respectively on each carriage 60 of each machining unit, as can be seen in Figure 2.

With reference to the figures a number of particular working configurations will be described. In Figure 1 the machine 12 according to the invention is shown with the second machining unit 36 inoperative, while the machining unit 20 is operative.

In Figure 2 both the machining units 20, 36 are operative and all three spindles with their cutting discs are performing a machining operation. The three cutting discs are arranged alongside each other and perform cuts parallel to each other. The same configuration is visible also in Figure 4 which shows it in a top plan view.

The machine may therefore operate in at least three different modes:
A first mode, in which the second machining unit 36 is located at one end of the beam and therefore its spindles and associated cutting discs are excluded from the slab cutting operation and only the spindle 30 of the first machining unit 20, namely that provided with the manipulator means 34, is used. It is possible to perform the so-called preliminary or separating cuts and then perform separation of the material cut using the same spindle which is provided with suction cups.

A first cut is then performed using the spindle 30 provided with suction cups. The spindle performs a cut along the entire length/width of the slab and then, by means of the suction cup unit with which it is provided, separates the cut parts from each other.

A second mode, in which only the spindles of the second machining unit 36 are used to perform straight cuts parallel to each other.

A third mode, in which both the machining units 20, 36 are used, positioning the rotating spindle 30 of the first cutting unit 26 so that it is able to perform a cut parallel to that of the cutting discs of the second machining unit 36.

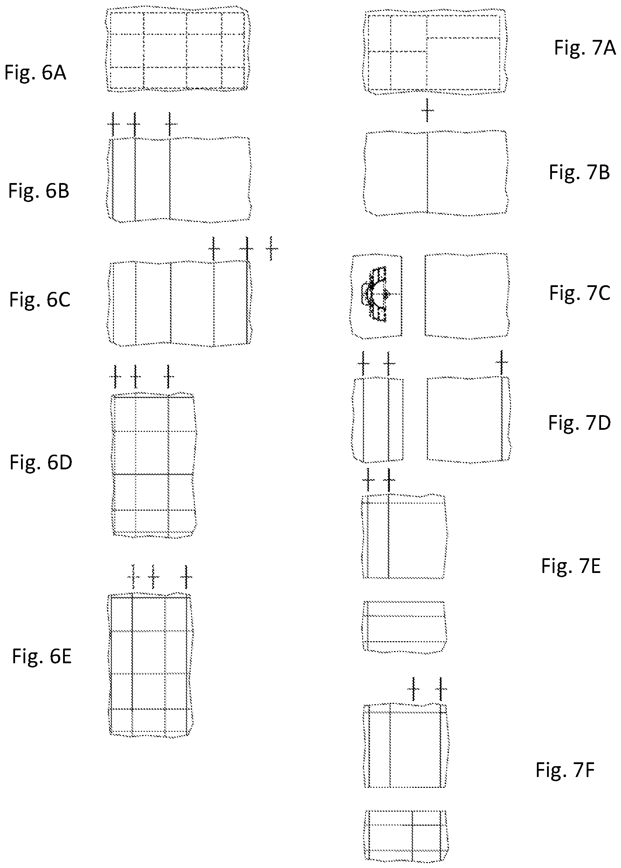

The second and third modes are used when, in the cut and separated parts, it is possible to perform a series of cuts all parallel to each other over the entire length/width of the cut parts. In order to understand better the concept described, Figures 6A-6E and 7A-7F show examples of two cutting sequences to be performed on a slab.

In the cutting sequence of Figures 6A-6E:
A) Figure A shows in broken lines the cut which must be performed;
B) Figure B shows in schematic form the execution of three parallel cuts using both the machining units 20, 36;
C) Figure C shows in schematic form the execution of a further two parallel cuts carried using both the machining units, but using a single cutting disc of the second machining unit 36 (the outermost disc is excluded);
D) Figure D shows in schematic form the rotation of the work bench 13 through 90° and the execution of three longitudinal cuts (cuts which are perpendicular to the cuts performed previously) using both the machining units;
E) In Figure E another longitudinal cut is performed, parallel to the preceding cuts, using the spindle of the first machining unit.

In the cutting diagram of Figures 7A-7F:
A) Figure A shows the cutting pattern to be carried out on the slab;
B) In Figure B, first a separation cut is performed using the spindle 30 provided with suction cups of the first machining unit 20;
C) In Figure C, separation of the two slab portions is performed by means of the suction cups, after rotating the manipulator means through 90°;
D) In Figure D three cuts are performed, using both the machining units 20,36;
E) In Figure E a rotation of the work bench through 90° is performed and two cuts are performed on one of the slab portions using the second machining unit 36;
F) In Figure F a further longitudinal cut is performed on the first part of material cut along the entire length of the material, followed by two further longitudinal cuts on the second part of material cut along the entire length of the material using the second machining unit 36.

The advantages which may be achieved with the machine according to the present invention are now clear.

A machine having a good production flexibility, but at the same time also having a good production capacity is obtained.

All of this whatever the cutting sequences to be performed on the slab to be cut, and moreover without any increase in the production costs of the machine or any limitation of the operating performance.

The person skilled in the art, in order to satisfy specific needs, may make modifications to the embodiments described above, without thereby departing from the scope of the attached claims.

For example, machines with more than one beam may be provided. In the same way, it is possible to envisage machines with a second spindle mounted on a bi-rotational head and equipped with suction cups, mounted on the same beam or on a different beam.

## Claims

1. Machine (12) for cutting slabs of stone or stone-like material comprising a fixed or rotating work bench (13), two lateral support structures (14, 16) between which at least one beam (18) runs; on said at least one beam (18) there being arranged a first machining unit (20) comprising:
a carriage (22) adapted to slide along the beam (18);
a sleeve (24) adapted to slide with respect to the carriage (22) in the vertical direction;
a machining head (26), connected to the lower end of the sleeve (24) and adapted to rotate relative to the sleeve (24) about a vertical axis (28); said machining head (26) comprising a spindle (30), on which a cutting disc (32) is mounted; and
manipulator means (34) for slabs or portions thereof;
**characterized in that** it comprises a second machining unit (36) slidably mounted on said at least one beam (18) and comprising at least one second machining head (38) with fixed orientation, adapted to be moved in the vertical direction and comprising a spindle (42) on which a cutting disc (46) is mounted.

2. Machine (12) according to claim 1, **characterized in that** the second machining unit (36) slidably mounted on said beam (18) comprises a second machining head (38) and at least a third machining head (40) with fixed orientation, arranged side-by-side and adapted to be moved in the vertical direction, each comprising a spindle (42, 44) on which a cutting disc can be mounted (46, 48).

3. Machine (12) according to claim 1, **characterized in that** said work bench (13) is provided with a motorized conveyor belt (92) for feeding the slabs.

4. Machine (12) according to claim 1, **characterized in that** the machining head (26) is adapted to rotate the spindle (30) both about a vertical axis and about a second axis of rotation.

5. Machine according to claim 4, **characterized in that** said second rotation axis is an axis inclined at 90 ° relative to the vertical axis of rotation.

6. Machine (12) according to claim 1, **characterized in that** the machining head (26) comprises a protection element (50) partially covering the cutting disk (32), the outer surface of the protection element being provided with the manipulator means (34), which comprise suction cups (52).

7. Machine (12) according to claim 1, **characterized in that** the first machining unit comprises manipulator means rotatable about a vertical axis and mounted on the sleeve (24).

8. Machine (12) according to claim 2, **characterized in that** the cutting discs (46, 48) of the second machining unit (36) are parallel to each other and are positioned perpendicularly relative to the direction of the beam.

9. Machine (12) according to claim 2, **characterized in that** the second machining unit (36) comprises a second carriage (60) which is adapted to slide along the beam (18) and on which there is arranged a second sleeve (62) which is movable in a vertical direction with respect to the second carriage (60) and on which the second machining head (38) is arranged; and a third carriage (64) which is adapted to slide along the beam (18) and on which there is arranged a third sleeve (66) which is movable in a vertical direction with respect to the third carriage (64) and on which the third machining head (40) is arranged.

10. Machine (12) according to claim 9, **characterized in that** the carriages (60, 64) of the second machining unit are movable along the beam (18) independently of one another.

11. Machine (12) according to claim 10, **characterized in that** the beam (18) is provided with two guides (68, 70) on which shoes (72, 74) arranged on each operating unit slide, said machine further comprising a rack (76) arranged parallel to the guides (68, 70), and motorized pinions (78, 80) arranged on each machining unit.

## Patentansprüche

1. Maschine (12) zum Schneiden von Platten aus Stein oder steinähnlichem Material mit einem festen oder sich drehenden Arbeitstisch (13), zwei seitlichen Stützstrukturen (14, 16), zwischen denen zumindest ein Träger (18) verläuft, wobei auf dem zumindest einen Träger (18) eine erste Bearbeitungseinheit (20) angeordnet ist, wobei die Maschine aufweist:
einen Wagen (22), der ausgelegt ist an dem Träger (18) entlang zu gleiten;
eine Hülse (24), die ausgelegt ist, bezüglich des Wagens (22) in der vertikalen Richtung zu gleiten;
einen Bearbeitungskopf (26) der mit dem unteren Ende der Hülse (24) verbunden ist und ausgelegt ist, sich relativ zur Hülse (24) um eine vertikale Achse (28) zu drehen, wobei der Bearbeitungskopf (26) eine Welle (30) aufweist, auf der eine Schneidscheibe (32) montiert ist, und
Handhabungsmittel (34) für Platten oder Teile davon,
**dadurch gekennzeichnet, dass** sie eine zweite Bearbeitungseinheit (36) aufweist, die gleitend auf dem zumindest einen Träger (18) montiert ist und zumindest einen zweiten Bearbeitungskopf (38) mit fester Orientierung aufweist, der ausgelegt ist, in der vertikalen Richtung bewegt zu werden und eine Welle (42) aufweist, auf der eine Schneidscheibe (46) montiert ist.

2. Maschine (12) gemäß Anspruch 1, **dadurch gekennzeichnet, dass** die zweite Bearbeitungseinheit (36), die gleitend auf dem Träger (18) montiert ist, einen zweiten Bearbeitungskopf (38) und zumindest einen dritten Bearbeitungskopf (40) mit fester Orientierung aufweist, die nebeneinander angeordnet sind und ausgelegt sind, in der vertikalen Richtung bewegt zu werden und jeweils eine Welle (42, 44) aufweisen, auf der eine Schneidscheibe (46, 48) montiert werden kann.

3. Maschine (12) gemäß Anspruch 1, **dadurch gekennzeichnet, dass** der Arbeitstisch (13) mit einem motorbetriebenen Förderband (92) zum Zuführen der Platten versehen ist.

4. Maschine (12) gemäß Anspruch 1, **dadurch gekennzeichnet, dass** der Bearbeitungskopf (26) ausgelegt ist, die Welle (30) sowohl um eine vertikale Achse als auch um eine zweite Drehachse zu drehen.

5. Maschine (12) gemäß Anspruch 4, **dadurch gekennzeichnet, dass** die zweite Drehachse eine um 90° gegenüber der vertikalen Drehachse geneigte Achse ist.

6. Maschine (12) gemäß Anspruch 1, **dadurch gekennzeichnet, dass** der Bearbeitungskopf (26) ein Schutzelement (50) aufweist, welches teilweise die Schneidscheibe (32) bedeckt, wobei die Außenfläche des Schutzelements mit dem Handhabungsmittel (34) versehen ist, welches Saugnäpfe (52) aufweist.

7. Maschine (12) gemäß Anspruch 1, **dadurch gekennzeichnet, dass** die erste Bearbeitungseinheit ein Handhabungsmittel aufweist, dass um eine vertikale Achse drehbar ist und an der Hülse (24) montiert ist.

8. Maschine (12) gemäß Anspruch 2, **dadurch gekennzeichnet, dass** die Schneidscheiben (46, 48) der zweiten Bearbeitungseinheit (36) parallel zueinander sind und senkrecht zu der Richtung des Trägers positioniert sind.

9. Maschine (12) gemäß Anspruch 2, **dadurch gekennzeichnet, dass** die zweite Bearbeitungseinheit (36) einen zweiten Wagen (60) aufweist, der ausgelegt ist, entlang des Trägers (18) zu gleiten und auf dem eine zweite Hülse (62) angeordnet ist, die bezüglich des zweiten Wagens (60) in einer vertikalen Richtung bewegbar ist und an der der zweite Bearbeitungskopf (38) angeordnet ist, und einen dritten Wagen (64), der ausgelegt ist, entlang des Trägers (18) zu gleiten und an dem eine dritte Hülse (66) angeordnet ist, welche bezüglich des dritten Wagens (64) in einer vertikalen Richtung bewegbar ist und an der der dritte Bearbeitungskopf (40) angeordnet ist.

10. Maschine (12) gemäß Anspruch 9, **dadurch gekennzeichnet, dass** die Wagen (60, 64) der zweiten Bearbeitungseinheit unabhängig voneinander entlang des Trägers (18) bewegbar sind.

11. Maschine (12) gemäß Anspruch 10, **dadurch gekennzeichnet, dass** der Träger (18) mit zwei Führungen (68, 70) versehen ist, bei denen auf jeder Gleitschiene der Bearbeitungseinheit Schuhe (72, 74) angeordnet sind, wobei die Maschine weiterhin eine parallel zu den Führungen (68, 70) angeordnete Zahnstange (76) und motorbetriebene Ritzel (78, 80), die an jeder Bearbeitungseinheit angeordnet sind, aufweist.

## Revendications

1. Machine (12) pour couper des dalles de matériaux pierreux ou similaires comprenant un établi fixe ou rotatif (13), deux structures de support latérales (14, 16) entre lesquelles s'étend au moins une poutre (18) ; sur ladite au moins une poutre (18), on agence une première unité d'usinage (20) comprenant :
un chariot (22) adapté pour coulisser le long de la poutre (18) ;
un manchon (24) adapté pour coulisser par rapport au chariot (22) dans la direction verticale ;
une tête d'usinage (26) raccordée à l'extrémité inférieure du manchon (24) et adaptée pour tourner par rapport au manchon (24) autour d'un axe vertical (28) ; ladite tête d'usinage (26) comprenant une broche (30) sur laquelle est monté un disque de coupe (32) ; et
des moyens manipulateurs (34) pour les dalles et leurs parties ;
**caractérisée en ce qu'**elle comprend une seconde unité d'usinage (36) montée de manière coulissante sur ladite au moins une poutre (18) et comprenant au moins une deuxième tête d'usinage (38) avec une orientation fixe, adaptée pour être déplacée dans la direction verticale et comprenant une broche (42) sur laquelle est monté un disque de coupe (46).

2. Machine (12) selon la revendication 1, **caractérisée en ce que** la seconde unité d'usinage (36) montée de manière coulissante sur ladite poutre (18) comprend une deuxième tête d'usinage (38) et au moins une troisième tête d'usinage (40) avec une orientation fixe, agencées côte à côte et adaptées pour être déplacées dans la direction verticale, comprenant chacune une broche (42, 44) sur laquelle un disque de coupe (46, 48) peut être monté.

3. Machine (12) selon la revendication 1, **caractérisée en ce que** ledit établi (13) est prévu avec une courroie transporteuse motorisée (92) pour alimenter les dalles.

4. Machine (12) selon la revendication 1, **caractérisée en ce que** la tête d'usinage (26) est adaptée pour faire tourner la broche (30) à la fois autour d'un axe vertical et autour d'un second axe de rotation.

5. Machine selon la revendication 4, **caractérisée en ce que** ledit second axe de rotation est un axe incliné à 90° par rapport à l'axe vertical de rotation.

6. Machine (12) selon la revendication 1, **caractérisée en ce que** la tête d'usinage (26) comprend un élément de protection (50) recouvrant partiellement le disque de coupe (32), la surface externe de l'élément de protection étant prévue avec les moyens manipulateurs (34) qui comprennent des ventouses (52).

7. Machine (12) selon la revendication 1, **caractérisée en ce que** la première unité d'usinage comprend des moyens manipulateurs pouvant tourner autour d'un axe vertical et sont montés sur le manchon (24).

8. Machine (12) selon la revendication 2, **caractérisée en ce que** les disques de coupe (46, 48) de la seconde unité d'usinage (36) sont parallèles entre eux et sont positionnés perpendiculairement par rapport à la direction de la poutre.

9. Machine (12) selon la revendication 2, **caractérisée en ce que** la seconde unité d'usinage (36) comprend un second chariot (60) qui est adapté pour coulisser le long de la poutre (18) et sur lequel on agence un deuxième manchon (62) qui est mobile dans une direction verticale par rapport au deuxième chariot (60), et sur lequel la deuxième tête d'usinage (38) est agencée ; et un troisième chariot (64) qui est adapté pour coulisser le long de la poutre (18) et sur lequel on agence un troisième manchon (66) qui est mobile dans une direction verticale par rapport au troisième chariot (64) et sur lequel la troisième tête d'usinage (40) est agencée.

10. Machine (12) selon la revendication 9, **caractérisée en ce que** les chariots (60, 64) de la seconde unité d'usinage sont mobiles le long de la poutre (18) indépendamment l'un de l'autre.

11. Machine (12) selon la revendication 10, **caractérisée en ce que** la poutre (18) est prévue avec deux guides (68, 70) sur lesquels des patins (72, 74) agencés sur chaque unité opérationnelle, glissent, ladite machine comprenant en outre une crémaillère (76) agencée parallèlement aux guides (68, 70) et des pignons motorisés (78, 80) agencés sur chaque unité d'usinage.
